# EUROPEAN PATENT SPECIFICATION

(11) **EP 2 405 049 B1**
(45) Date of publication and mention of the grant of the patent: **12.12.2012**
(21) Application number: 11005513.4
(22) Date of filing: 06.07.2011
(51) Int. Cl.: D06F 33/02, D06F 37/30

(54) **A method for selecting a parameter set for operating an electric motor used in a washing and/or drying appliance and a washing and/or drying appliance implementing the method**
Verfahren zum Auswählen eines Parametersatzes zum Betreiben eines Elektromotors, der in einer Wasch- und/oder Trockenvorrichtung verwendet wird, und Wasch- und/oder Trockenvorrichtung, die das Verfahren umsetzt
Procédé de sélection d'un ensemble de paramètres pour le fonctionnement d'un moteur électrique utilisé dans un lave-linge et/ou sèche-linge et lave-linge et/ou sèche-linge appliquant le procédé

(30) Priority: 07.07.2010 IT RN20100038
(43) Date of publication of application: 11.01.2012
(73) Proprietor: Indesit Company S.p.A., 60044 Fabriano (AN) (IT)
(72) Inventor: Beato, Alessio, 60044 Fabriano (Ancona) (IT)
(74) Representative: Monelli, Alberto

(56) References cited:
- EP-A2- 0 684 692
- WO-A1-2009/132996
- DE-B3- 10 331 934

## Description

This invention relates to a method for selecting a parameter set for operating an electric motor used in a washing and/or drying appliance. This invention also relates to a washing and/or drying appliance implementing the method. Laundry washers and dishwashers have an electric motor to be able to operate. More specifically, the electric motor in laundry washers drives at least the rotating drum inside which the laundry to be washed is placed. In dishwashers the electric motor drives at least the pump which draws water from the sump for sending to the rotating nozzles.

For reasons of a commercial nature, the manufacturers of laundry washers and dishwashers normally have a plurality of electric motor suppliers.

So that the washing appliance can interact with the motor there must be an electronic card designed to control operation of the motor. However, in order to correctly control the operation of the motor, the electronic card must be set with certain characteristic parameters of the motor. An electronic card set with the characteristic parameters of a certain type of motor cannot correctly control a motor of another type (such as a motor from a different manufacturer). This creates complications in the management of the store and spare parts.

Document WO 2009/132996 discloses a known washing machine.

In this context, the technical purpose which forms the basis of this invention is to propose a washing and/or drying appliance and a method for selecting a parameter set for operating an electric motor used in a washing and/or drying appliance which overcomes the above-mentioned disadvantages of the prior art.

More specifically, the aim of this invention is to provide a method which can facilitate the management of the store.

A further aim of this invention is to propose a method and a washing and/or drying appliance allowing control of an electric motor.

The technical purpose and aims specified are substantially achieved by a method and a washing and/or drying appliance comprising the technical features set out in one or more of the accompanying claims.

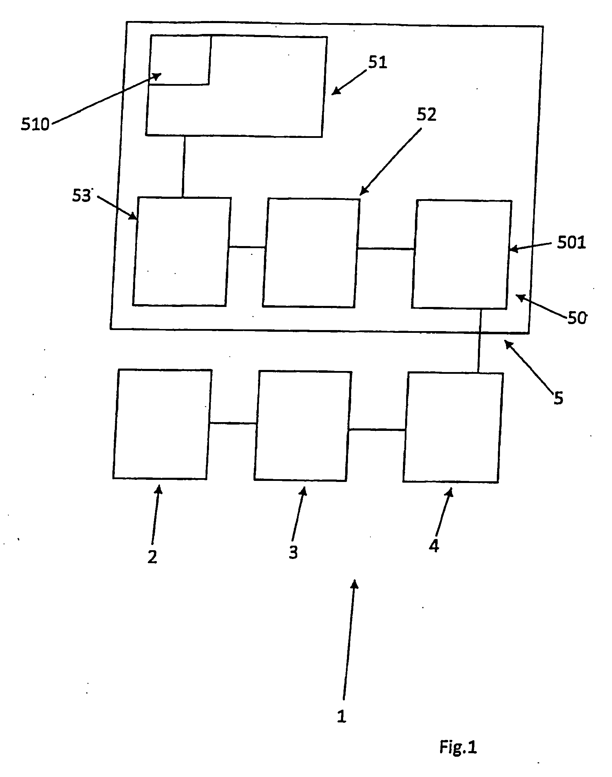

Further features and advantages of the invention are more apparent in the non-limiting description which follows of a preferred non-exclusive embodiment of a washing and/or drying appliance, in which: Figure 1 schematically shows a washing and/or drying appliance according to this invention.

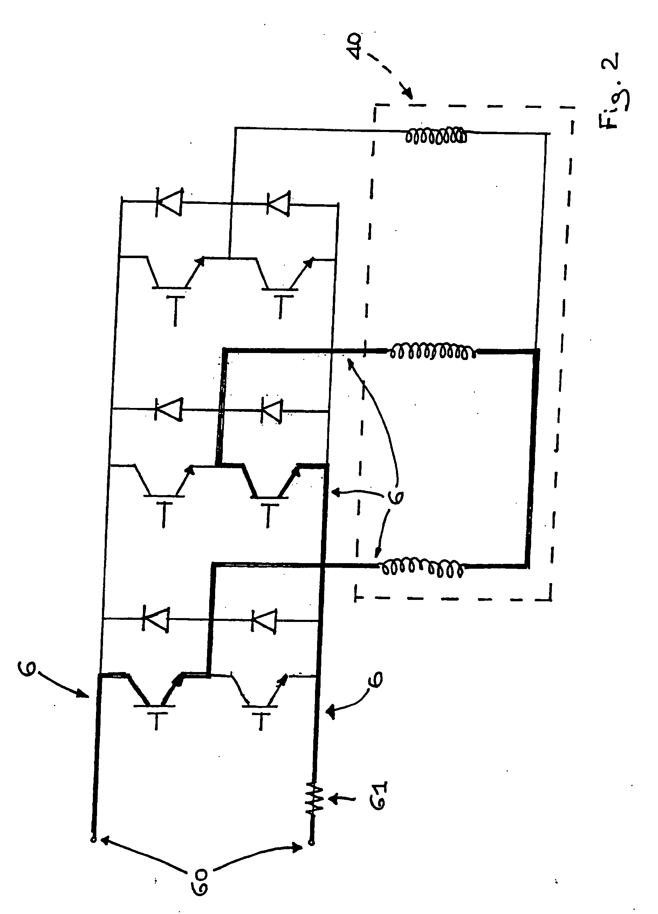

Figure 2 shows an electrical diagram of a portion of the washing and/or drying appliance according to this invention.

In the accompanying drawings, the numeral 1 denotes a washing and/or drying appliance.

For example, the washing and/or drying appliance comprises:
- a dishwasher or
- a laundry washer or a drying machine or a washer-dryer for washing laundry.

The washing and/or drying appliance 1 comprises a washing and/or drying compartment 2 inside the appliance 1 to hold the items to be washed. If the washing and/or drying appliance is a laundry washer the washing and/or drying compartment 2 may comprise a compartment which houses a rotating drum to hold the items to be washed. If the washing and/or drying appliance is a dishwasher the washing and/or drying compartment 2 comprises for example a compartment housing means of supporting the dishes to be washed (for example, at least one suitably shaped extractable carriage on which to place the items to be washed).

The washing and/or drying appliance 1 also comprises means 3 for washing and/or drying the items placed in the washing and/or drying compartment 2. If the washing and/or drying appliance 1 is a laundry washer, the washing and/or drying means 3 comprise for example a rotating drum which moves the laundry contained therein. If the washing and/or drying appliance 1 is a dishwasher, the washing and/or drying means 3 comprise for example a pump which moves the washing liquid from a drain sump positioned at the bottom of the dishwasher toward rotating spraying devices located in the washing and/or drying compartment 2. The aforementioned washing and/or drying means 3 are known in the art and therefore not described further. The washing and/or drying appliance 1 comprises an electric motor 4 for driving at least a part of the washing and/or drying means 3. In the case of the aforementioned examples, the motor 4 drives the rotating drum or the pump which moves the washing liquid.

The washing and/or drying appliance 1 also comprises a control system 5 (typically electronic) interacting with the electric motor 4. The control system 5 conveniently comprises/is comprised of an electronic card for example comprising a plurality of integrated circuits.

The control system 5 comprises a memory 51 which stores a plurality of parameter sets for operating the electric motor 4. Each set corresponding to a predetermined type of electric motor 4. The memory 51 advantageously stores all the operating parameter sets associated with the motors which hypothetically the manufacturer of the washing and/or drying appliance 1 could want to use (for example, all the motors of the various suppliers normally used in that certain application). The parameters are, for example, specific algorithmic coefficients allowing an electronic card to control one motor rather than another.

Advantageously, the electric motor 4 is a three-phase electric motor. The motor 4 conveniently comprises a central rotor which moves a drive transmission shaft and a peripheral stator 40 which surrounds the area in which the rotor is positioned. Conveniently, there are electrical windings on the stator 40 generating a magnetic field which interact with a magnetic field generated by magnetic means (permanent magnets or other windings through which electrical current passes) positioned on the rotor. Following the interaction an electromagnetic force is generated which rotates the rotor. The control system 5 also comprises means 50 of directly or indirectly measuring a predetermined electrical quantity associated with the electric motor 4.

The predetermined electrical quantity is the value of the resistance and/or inductance of a branch of stator 40 of the electric motor 4.

Advantageously, the appliance 1 comprises an electrical path 6 (indicated for example with a thicker line in Figure 2) in turn comprising a section of the stator 40 and a measurement resistor 61 outside the motor 4 and electrically connected to the stator section 40. In Figure 2 the parts of the circuit outside the stator 40 form part of a control circuit. The measurement resistor 61 is known in technical jargon as a shunt. It has a very small resistance value so as not to reduce the current passing through the path 6. The measurement resistor 61 is typically connectable in series with the stator section 40. If necessary, there may also be a plurality of measurement resistors.

The measuring means 50 in turn comprise a device 501 for measuring the voltage drop along the measurement resistor 61. The voltage value may then be converted into a digital signal by means of an A/D converter.

The measuring means 50 indirectly determine the electrical quantity associated with the motor 4 (the resistance and/or inductance of a branch of stator 40) according to the voltage drop along the measurement resistor 61 (measured directly) and according to the predetermined voltage applied to the ends 60 of the electrical path 6.

Conveniently, the electrical quantity associated with the motor 4 is measured indirectly applying a predetermined sequence of voltage values to one or more phases of the electric motor 4 and measuring the voltage drop across the measurement resistor 61.

Conveniently, the control system 5 comprises means 52 for comparing with reference values of the electrical quantity measured (directly or indirectly) or a quantity derived from it (the derived quantity could be, for example, a mathematical processing of the measured electrical quantity).

A corresponding series of reference values is preliminarily associated with each parameter set.

Conveniently, the control system 5 comprises means 53 for selecting and entering the parameter set associated with the series of reference values corresponding with the value of the electrical quantity measured (directly or indirectly) or the quantity derived from it.

In this way, if the measured electrical quantity (or a preliminarily established mathematical processing of the measured electrical quantity) is equal to a value "x", the control system 5 checks, for example, within which set of reference values the value "x" lies. Since each set of reference values is associated with a single set of parameters, the control system 5 understands which motor is fitted and will use the corresponding parameter set. In this way, the control system 5 acts like a device for recognising the electric motor 4 fitted on the washing and/or drying appliance 1. Consequently, the corresponding parameter set for controlling the motor 4 is selected fully automatically according to the type of motor 4. Conveniently, the memory 51 comprises a first memory portion 510 in which the parameter set entered by the selecting and entering means 53 is stored. The electric motor 4 is controlled using the parameter set entered in the first portion 510 of memory 51. In the preferred embodiment, the washing and/or drying appliance 1 will continue to use that parameter set until the value is overwritten.

More specifically, the memory 51 comprises:
- a non-volatile memory (typically a Flash memory) which stores the parameter sets for controlling the motors and, conveniently, also a preliminary set of control parameters designed to perform a test for selecting the set of control parameters;
- a volatile memory integrated in the device (for example, the volatile memory is integrated in a Digital Signal Processor (DSP), a component well known in the technical sector and therefore not described further). The electronic card copies the set of control parameters currently selected (and allocated in the non-volatile memory, more specifically in the first portion of the memory 51) into the volatile memory when the washing and/or drying appliance is switched on.

There is a circuit in the electronic card dedicated to controlling the motor, including the DSP which implements the algorithm and comprising the volatile memory in which the sets of control parameters are loaded. There is also a more general circuit in the electronic card dedicated to controlling the appliance in its entirety (management of cycles, control of loads, diagnostics, etc.). When the washing and/or drying appliance 1 is first switched on the set of control parameters is the one designed to perform the test. Following performance of the test the electronic card selects as the set of parameters for controlling the motor the one indicated as the result of the test.

Conveniently, the control system 5 comprises a control card for the washing and/or drying appliance 1. The memory 51 is integrated in the card which also comprises the means 50 for measuring an electrical quantity associated with the motor 4, the means 52 for comparing and the means 53 for selecting and entering the parameter sets.

This invention also relates to a method for selecting a parameter set for operating an electric motor 4 used in a washing and/or drying appliance 1. Conveniently, the electric motor 4 is a three-phase electric motor. The method is advantageously implemented by a washing and/or drying appliance 1 having one or more of the technical features described above. The method comprises the steps of:
- storing in a memory 51 of the washing and/or drying appliance 1 a plurality of parameter sets each permitting the operation of a corresponding electric motor 4;
- performing a test for directly or indirectly measuring a predetermined electrical quantity associated with the motor 4;
- comparing this electrical quantity or a value derived from it with reference values, a corresponding series of reference values being preliminarily associated with each parameter set;
- selecting for control of the electric motor 4 the parameter set associated with the series of reference values in which lies the value of the electrical quantity measured in the test or the value derived from it.

As already indicated, the value derived from the electrical quantity may be preliminarily established by mathematical processing of the electrical quantity measured.

Conveniently, the parameter set associated with the series of reference values in which lies the value of the electrical quantity measured in the test or the value derived from it is kept unchanged in a plurality of successive washing cycles. The parameter set selected (during the test) is kept unchanged until a new test is performed using an electric motor 4 different from the one used previously. The washing and/or drying appliance 1 may be subjected to a new procedure for selecting the parameter set, for example for maintenance operations following a faulty operation or the change of motor. More specifically, the parameter set associated with the series of reference values in which lies the value of the electrical quantity measured in the test or the value derived from it is stored in a portion 510 of memory and is used until a new test overwrites the value. Conveniently, the test is performed once in the life of the washing and/or drying appliance 1. More specifically, the test is performed during inspection (conveniently, before marketing the washing and/or drying appliance 1). In the preferred embodiment, once the machine has recognised the electric motor 4 the value is no longer modified.

Advantageously, the step of performing the test comprises:
- passing electrical current through an electrical path 6, the electrical path 6 comprising at least a section of a stator 40 of the electric motor 4 and a measurement resistor 61 outside the motor 4 and electrically connected to the stator section 40. More specifically, the measurement resistor 61 is connectable in series with the stator section 40.
- taking a measurement of the voltage drop along the measurement resistor 61;
- determining the electrical quantity associated with the motor 4 according to the voltage drop along the measurement resistor 61 and according to the predetermined voltage applied to the ends 60 of the electrical path 6.

The step of passing electrical current comprises applying a predetermined profile of the voltage to the ends 60 of the electrical path 6. The measurement resistor 61 is interposed between the ends 60 of the path 6. This invention has important advantages.

First of all, it allows management of the store to be simplified since any motor selected amongst a predetermined group may be applied on a washing and/or drying appliance. This considerably simplifies management of the incoming and outgoing store flows.

Another important advantage is also due to the fact that errors associated with the assembly of a motor different from the one initially planned may be simply resolved by implementing a standard procedure (avoiding the need to make replacements on appliances already assembled).

It shall be understood that the invention described above may be modified and adapted in several ways without departing from the scope of the inventive concept. Moreover, all the details of the invention may be substituted by other technically equivalent elements. In practice, all the materials used, as well as the dimensions, may vary according to requirements.

## Claims

1. A method for selecting a parameter set for operating an electric motor (4) used in a washing and/or drying appliance (1), the method comprising the step of entering in a memory (51) of the washing and/or drying appliance (1) a plurality of parameter sets each permitting the operation of a corresponding electric motor (4); said method being **characterised in that** it comprises the steps of:
- performing a test for directly or indirectly measuring a predetermined electrical quantity associated with the motor (4);
- comparing this electrical quantity or a value derived from it with reference values, a corresponding series of reference values being preliminarily associated with each parameter set;
- selecting for control of the electric motor (4) the parameter set associated with the series of reference values in which lies the value of the electrical quantity measured in the test or the value derived from it.

2. The method according to claim 1, **characterised in that** the parameter set selected is kept unchanged until a new test is performed using an electric motor (4) different from the one used previously.

3. The method according to claim 1 or 2, **characterised in that** the electric motor (4) is a three-phase electric motor.

4. The method according to claim 1 or 2 or 3, **characterised in that** the step of performing the test comprises:
- passing electrical current through an electrical path (6), the electrical path (6) comprising at least a section of a stator (40) of the electric motor (4) and a measurement resistor (61) outside the motor (4) and electrically connected to the stator section (40);
- taking a measurement of the voltage drop along the measurement resistor (61);
- determining the electrical quantity associated with the motor (4) according to the voltage drop along the measurement resistor (61) and according to the predetermined voltage applied to the ends (60) of the electrical path (6).

5. The method according to claim 4, **characterised in that** the step of passing electrical current comprises applying a predetermined profile of the voltage to the ends (60) of the electrical path (6).

6. The method according to claim 4 or 5, **characterised in that** the electrical quantity is a resistance and/or an inductance of a part of the stator (40).

7. A washing and/or drying appliance comprising:
- a washing and/or drying compartment (2) inside the appliance (1) to hold the items to be washed and/or dried;
- means (3) for washing and/or drying the items placed in the washing and/or drying compartment (2);
- an electric motor (4) for driving at least a part of the washing and/or drying means (3);
- a control system (5) interacting with the electric motor (4) and comprising a memory (51) which stores a plurality of parameter sets for operating the electric motor (4), each set corresponding to a predetermined type of electric motor (4);
the washing and/or drying appliance being **characterised in that** the control system (5) comprises:
means (50) of directly or indirectly measuring a predetermined electrical quantity associated with the electric motor (4);
means (52) for comparing the measured electrical quantity or a quantity derived from it with reference values, a corresponding series of reference values being preliminarily associated with each parameter set;
means (53) for selecting and entering the parameter set associated with the series of reference values corresponding with the value of the measured electrical quantity or the quantity derived from it.

8. The appliance according to claim 7, **characterised in that** the electric motor (4) comprises a stator (40); the electrical quantity being the value of the resistance and/or the inductance of a predetermined portion of the stator (40).

9. The appliance according to claim 8, **characterised in that** it comprises an electrical path (6) in turn comprising a section of the stator (40) and a measurement resistor (61) outside the motor (4) and electrically connected to the section of the stator (40); the measuring means (50) comprising a device (501) measuring the voltage drop along the measurement resistor (61); the measurement means (50) indirectly determining the electrical quantity associated with the motor (4) according to the voltage drop of the measurement resistor (61) and according to the voltage applied to the ends (60) of the path (6).

10. The appliance according to claim 7 or 8 or 9, **characterised in that** the memory (51) comprises a first memory portion (510) in which the parameter set entered by the selecting and entering means (53) is stored, the electric motor (4) being controlled using the parameter set entered in the first portion (510) of memory (51).

## Patentansprüche

1. Verfahren zum Auswählen eines Parametersatzes zum Betreiben eines Elektromotors (4), der in einer Wasch - und/oder Trockenvorrichtung (1) verwendet wird, wobei das Verfahren den Schritt der Eingabe einer Vielzahl von Parametersätzen in einen Speicher (51) der Wasch - und/oder Trockenvorrichtung (1) umfasst, die jeweils das Betreiben eines entsprechenden Elektromotors (4) gestatten, wobei das Verfahren **dadurch gekennzeichnet ist, dass** es die folgenden Schritte umfasst:
- Ausführen eines Tests zur direkten oder indirekten Messung einer festgelegten elektrischen Größe, die dem Motor (4) zugeordnet ist;
- Vergleichen dieser elektrischen Größe oder eines daraus abgeleiteten Wertes mit Referenzwerten, wobei vorläufig jedem Parametersatz eine entsprechende Reihe von Referenzwerten zugeordnet ist;
- Auswählen des der Reihe von Referenzwerten zugeordneten Parametersatzes, in die der Wert der elektrischen Größe, die im Test gemessen wurde, oder der daraus abgeleitete Wert fällt, zum Steuern des Elektromotors (4).

2. Verfahren nach Anspruch 1, **dadurch gekennzeichnet, dass** der ausgewählte Parametersatz unverändert gelassen wird, bis ein neuer Test mit einem Elektromotor (4) durchgeführt wird, der sich von dem zuvor verwendeten unterscheidet.

3. Verfahren nach Anspruch 1 oder 2, **dadurch gekennzeichnet, dass** der Elektromotor (4) ein Dreiphasen-Elektromotor ist.

4. Verfahren nach Anspruch 1 oder 2 oder 3, **dadurch gekennzeichnet, dass** der Schritt des Ausführens des Tests Folgendes umfasst:
- Leiten von elektrischem Strom durch einen Stromweg (6), wobei der Stromweg (6) mindestens einen Abschnitt eines Stators (40) des Elektromotors (4) und einen Messwiderstand (61) umfasst, der außerhalb des Motors (4) liegt und elektrisch mit dem Statorabschnitt (40) verbunden ist;
- Messen des Spannungsabfalls entlang dem Messwiderstand (61);
- Bestimmen der dem Motor (4) zugeordneten elektrischen Größe je nach Spannungsabfall entlang dem Messwiderstand (61) und je nach festgelegter Spannung, die an die Enden (60) des Stromwegs (6) angelegt wird.

5. Verfahren nach Anspruch 4, **dadurch gekennzeichnet, dass** der Schritt des Leitens von elektrischem Strom das Anlegen eines festgelegten Profils der Spannung an die Enden (60) des Stromwegs (6) umfasst.

6. Verfahren nach Anspruch 4 oder 5, **dadurch gekennzeichnet, dass** die elektrische Größe ein Widerstand und/oder eine Induktivität eines Teils des Stators (40) ist.

7. Wasch- und/oder Trockenvorrichtung, umfassend:
- ein Wasch- und/oder Trockenfach (2) in der Vorrichtung (1) zum Halten der zu waschenden und/oder zu trocknenden Gegenstände;
- Mittel (3) zum Waschen und/oder Trocknen der im Wasch- und/oder Trockenfach (2) platzierten Gegenstände;
- einen Elektromotor (4) zum Betreiben zumindest eines Teils der Wasch- und/oder Trockenmittel (3);
- ein Steuerungssystem (5), das mit dem Elektromotor (4) interagiert und einen Speicher (51) umfasst, der eine Vielzahl von Parametersätzen zum Betreiben des Elektromotors (4) speichert, wobei jeder Satz einem festgelegten Typ von Elektromotor (4) entspricht;
wobei die Wasch- und/oder Trockenvorrichtung **dadurch gekennzeichnet ist, dass** das Steuerungssystem (5) Folgendes umfasst:
Mittel (50) zur direkten oder indirekten Messung einer festgelegten elektrischen Größe, die dem Elektromotor (4) zugeordnet ist;
Mittel (52) zum Vergleichen der gemessenen elektrischen Größe oder einer daraus abgeleiteten Größe mit Referenzwerten, wobei jedem Parametersatz vorläufig eine entsprechende Reihe von Referenzwerten zugeordnet ist;
Mittel (53) zum Auswählen und zur Eingabe des der Reihe von Referenzwerten zugeordneten Parametersatzes, die dem Wert der gemessenen elektrischen Größe oder der daraus abgeleiteten Größe entsprechen.

8. Vorrichtung nach Anspruch 7, **dadurch gekennzeichnet, dass** der Elektromotor (4) einen Stator (40) umfasst, wobei die elektrische Größe der Wert des Widerstands und/oder der Induktivität eines festgelegten Teils des Stators (40) ist.

9. Vorrichtung nach Anspruch 8, **dadurch gekennzeichnet, dass** sie einen Stromweg (6) umfasst, der wiederum einen Abschnitt des Stators (40) und einen Messwiderstand (61) umfasst, der außerhalb des Motors (4) liegt und elektrisch mit dem Statorabschnitt (40) verbunden ist, wobei die Messmittel (50) eine Einrichtung (501) umfassen, die den Spannungsabfall entlang dem Messwiderstand (61) misst, wobei die Messmittel (50) indirekt die dem Motor (4) zugeordnete elektrische Größe je nach Spannungsabfall des Messwiderstands (61) und je nach der Spannung bestimmen, die an die Enden (60) des Wegs (6) angelegt wird.

10. Vorrichtung nach Anspruch 7 oder 8 oder 9, **dadurch gekennzeichnet, dass** der Speicher (51) einen ersten Speicherabschnitt (510) umfasst, in dem der von den Auswahl- und Eingabemitteln (53) eingegebene Parametersatz gespeichert wird, wobei der Elektromotor (4) mithilfe des Parametersatzes gesteuert wird, der in den ersten Abschnitt (510) des Speichers (51) eingegeben wird.

## Revendications

1. Procédé de sélection d'un ensemble de paramètres pour le fonctionnement d'un moteur électrique (4) utilisé dans un lave-linge et/ou sèche-linge (1), comprenant l'étape d'entrer dans une mémoire (51) du lave-linge et/ou du sèche-linge (1) une pluralité d'ensembles de paramètres permettant chacun le fonctionnement d'un moteur électrique (4) correspondant ; ledit procédé étant **caractérisé en ce qu'**il comprend les étapes de :
- réaliser un test pour mesurer directement ou indirectement une grandeur électrique prédéterminée associée au moteur (4) ;
- comparer cette grandeur électrique ou une valeur en dérivant avec des valeurs de référence, une série correspondante de valeurs de référence étant associées de façon préliminaire à chaque ensemble de paramètres ;
- sélectionner pour la commande du moteur électrique (4) l'ensemble de paramètres associé à la série de valeurs de référence dans laquelle se trouve la valeur de la grandeur électrique mesurée au cours du test ou la valeur en dérivant.

2. Procédé selon la revendication 1, **caractérisé en ce que** l'ensemble de paramètres sélectionné reste inchangé jusqu'à la réalisation d'un nouveau test en utilisant un moteur électrique (4) différent de celui utilisé précédemment.

3. Procédé selon la revendication 1 ou 2, **caractérisé en ce que** le moteur électrique (4) est un moteur électrique triphasé.

4. Procédé selon la revendication 1 ou 2 ou 3, **caractérisé en ce que** l'étape de réaliser le test comprend :
- faire passer du courant électrique à travers un chemin électrique (6), le chemin électrique (6) comprenant au moins une section d'un stator (40) du moteur électrique (4) et une résistance de mesure (61) à l'extérieur du moteur (4) et reliée électriquement à la section du stator (40) ;
- mesurer la chute de tension le long de la résistance de mesure (61) ;
- déterminer la grandeur électrique associée au moteur (4) en fonction de la chute de tension le long de la résistance de mesure (61) et de la tension prédéterminée appliquée aux extrémités (60) du chemin électrique (6).

5. Procédé selon la revendication 4, **caractérisé en ce que** l'étape de faire passer du courant électrique comprend l'application d'un profil prédéterminé de la tension aux extrémités (60) du chemin électrique (6).

6. Procédé selon la revendication 4 ou 5, **caractérisé en ce que** la grandeur électrique est une résistance et/ou une inductance d'une partie du stator (40).

7. Lave-linge et/ou sèche-linge comprenant :
- un compartiment de lavage et/ou de séchage (2) à l'intérieur de l'appareil (1) pour retenir les articles à laver et/ou à sécher ;
- un moyen (3) pour laver et/ou sécher les articles placés dans le compartiment de lavage et/ou de séchage (2) ;
- un moteur électrique (4) pour entraîner au moins une partie du moyen de lavage et/ou de séchage (3) ;
- un système de commande (5) interagissant avec le moteur électrique (4) et comprenant une mémoire (51) qui stocke une pluralité d'ensembles de paramètres pour le fonctionnement du moteur électrique (4), chaque ensemble correspondant à un type de moteur électrique (4) prédéterminé ;
le lave-linge et/ou le sèche-linge étant **caractérisé en ce que** le système de commande (5) comprend :
un moyen (50) pour mesurer directement ou indirectement une grandeur électrique prédéterminée associée au moteur électrique (4) ;
un moyen (52) pour comparer la grandeur électrique mesurée ou une grandeur en dérivant à des valeurs de référence, une série correspondante de valeurs de référence étant associée de façon préliminaire à chaque ensemble de paramètres ;
un moyen (53) pour sélectionner et entrer l'ensemble de paramètres associé à une série de valeurs de référence correspondant à la valeur de la grandeur électrique mesurée ou à la grandeur en dérivant.

8. Appareil selon la revendication 7, **caractérisé en ce que** le moteur électrique (4) comprend un stator (40) ; la grandeur électrique étant la valeur de la résistance et/ou l'inductance d'une portion prédéterminée du stator (40).

9. Appareil selon la revendication 8, **caractérisé en ce qu'**il comprend un chemin électrique (6) comprenant à son tour une section du stator (40) et une résistance de mesure (61) à l'extérieur du moteur (4) et reliée électriquement à la section du stator (40) ; le moyen de mesure (50) comprenant un dispositif (501) mesurant la chute de tension le long d'une résistance de mesure (61) ; le moyen de mesure (50) déterminant indirectement la grandeur électrique associée au moteur (4) en fonction de la chute de tension de la résistance de mesure (61) et de la tension appliquée aux extrémités (60) du chemin (6).

10. Appareil selon la revendication 7 ou 8 ou 9, **caractérisé en ce que** la mémoire (51) comprend une première portion de mémoire (510) dans laquelle est stocké l'ensemble de paramètres entré par le moyen de sélection et d'entrée (53), le moteur électrique (4) étant contrôlé en utilisant l'ensemble de paramètres entré dans la première portion (510) de mémoire (51).
